# FASCICULE DE BREVET EUROPEEN

(11) **EP 1 834 277 B1**
(45) Date de publication et mention de la délivrance du brevet: **26.05.2010**
(21) Numéro de dépôt: 05850490.3
(22) Date de dépôt: 22.12.2005
(51) Int. Cl.: G06K 7/00

(54) **PROCEDE DE COMMUNICATION PAR UN DETECTEUR DE PRESENCE DE CARTES A PUCES DANS UN LECTEUR, CARTES A PUCES ET APPAREIL LECTEUR COMMUNIQUANT PAR LE DETECTEUR DE PRESENCE**
VERFAHREN, DURCH DAS EIN DETEKTOR DIE ANWESENHEIT VON CHIPKARTEN IN EINEM LESER ÜBERMITTELT, CHIPKARTEN UND EINE LESEEINRICHTUNG, DIE DURCH DEN PRÄSENZDETEKTOR KOMMUNIZIEREN
METHOD FOR COMMUNICATING BY A DETECTOR OF THE PRESENCE OF CHIP CARDS IN A READER, CHIP CARDS AND A READING DEVICE COMMUNICATING BY THE PRESENCE DETECTOR

(30) Priorité: 07.01.2005 FR 0550063; 10.01.2005 FR 0550088
(43) Date de publication de la demande: 19.09.2007
(73) Titulaire: Thomson Licensing SAS, 92443 Issy-les-Moulineaux Cedex (FR)
(72) Inventeur: WILL, Patrick, F-35690 Acigne (FR); HORR, Olivier, F-35000 Rennes (FR); LAUNAY, Philippe, F-35200 Rennes (FR)
(74) Mandataire: Le Dantec, Claude
(86) Numéro de dépôt international: PCT/EP2005/057115
(87) Numéro de publication internationale: WO 2006/072552

(56) Documents cités:
- EP-A- 0 858 046
- WO-A-98/14916
- DE-A1- 19 542 262
- US-A- 5 912 618
- US-B1- 6 216 955

## Description

La présente invention concerne un procédé de commutation de voies de communication pour des circuits de cartes à puces, une carte à puce et un appareil lecteur pour la mise en oeuvre du procédé.

De nos jours, de nombreux appareils contiennent un lecteur de carte à puce. Les cartes à puces sont des objets généralement associés à un individu ou à un service et dotés de circuits intégrés notamment dans un but de sécurité. Les cartes à puce sont utilisées dans la téléphonie mobile pour identifier un abonné, dans le domaine bancaire pour certifier un paiement et dans les décodeurs de télévision pour authentifier les droits d'un abonné. Parmi les cartes à puces courantes, les cartes à microprocesseur contiennent une unité centrale, une mémoire ROM contenant un programme exécutable, une mémoire RAM de travail et une mémoire EEPROM pour le stockage permanent de données. Les cartes à microprocesseur sont connectées avec le lecteur grâce à des plots de contact, ces plots permettent l'alimentation, le signal de Remise à Zéro (RAZ en abrégé), le signal d'horloge pour cadencer le microprocesseur, et une ligne de communication bidirectionnelle appelée I/O. Un autre plot appelé I/O2 est normalisé et peut servir pour la communication mais il n'est à ce jour pas utilisé. La position de tous les plots, la nature des signaux électriques transmis et les données échangées par la ligne I/O sont normalisés dans le standard ISO 7816- 1, 2 et 3, édité par l'ISO. En règle très générale, cinq plots sont utilisés dont un seul permet de transporter des données de façon bidirectionnelle.

La carte en plastique doit être suffisamment souple pour être mise dans une poche ou un portefeuille, et le circuit incorporé à l'intérieur doit résister à un certain niveau de courbure. Pour cela, la taille de l'unique circuit est limitée à une vingtaine de millimètres carrés. De ce fait les performances sont limitées tant en puissance de calcul qu'en place mémoire. De nos jours, les cartes à puces sont de plus en plus utilisées et il existe une réelle nécessité à augmenter les performances. Une augmentation des performances peut s'effectuer en augmentant le nombre de circuits dans la carte. Une telle solution a été adoptée par plusieurs fabricants de cartes qui ont implémenté jusqu'à quatre circuits, chacun proche d'un des quatre coins de la carte. Une sérigraphie adaptée permet à l'utilisateur de connaître les applications implémentées dans chacun des circuits, de cette façon il peut introduire la carte dans le lecteur, le circuit qu'il veut mettre sous tension étant celui sous le plot sur le dessus au bout à droite de la carte lorsque celle-ci se présente à l'entrée du lecteur. De cette façon, l'utilisateur dispose d'une seule carte au lieu d'en avoir quatre. Cette solution présente l'inconvénient que deux circuits ne peuvent communiquer en même temps avec le lecteur. Pour passer d'un circuit à l'autre, il faut que l'utilisateur retire la carte et l'introduise en changeant de sens et/ou en changeant de face. L'utilisateur doit donc être constamment présent pour effectuer ces opérations, et de toute façon, cette solution n'est pas envisageable si deux circuits de la carte doivent communiquer entre eux.

Une autre façon de faire consiste à munir la carte d'une communication avec contact pour un circuit et d'une communication sans contact avec un autre circuit. Il est connu des circuits pour carte à puce que l'on connecte à une bobine noyée dans l'épaisseur de la carte. La bobine assure à la fois l'alimentation et la communication. Mais la communication avec l'un ou l'autre circuit nécessite d'équiper le lecteur avec un connecteur et des bobines, en faisant attention que les signaux échangés par une voie de communication ne pollue pas les signaux échangés avec l'autre voie de communication. De ce fait, cette solution est coûteuse et délicate à mettre en oeuvre.

Il est connu des cartes à microprocesseur, appelée supersmart card qui comportent un écran LCD, un clavier, un moyen autonome d'alimentation ainsi qu'une voie de communication par radio en plus du plot de connexion par contact électrique normalisé. Une telle carte à microprocesseur est par exemple décrite dans le brevet EP 203 683 déposé par la société VISA INTERNATIONAL. Lorsqu'un utilisateur les insère dans un lecteur, ces cartes dialoguent avec contact mais l'accès au clavier n'est plus possible. Hors du lecteur, ces cartes communiquent par radio avec un appareil. Cependant, ces cartes sont très fragiles et coûteuses, et n'ont jamais été réellement commercialisées.

Les décodeurs de télévision permettent de recevoir des signaux provenant d'une antenne, de décoder ces signaux et de les envoyer à un écran de télévision. Un décodeur n'a pas beaucoup de boutons en face avant, généralement moins de cinq. Grâce à une télécommande, l'utilisateur peut commander à distance le changement de chaîne, le réglage du son, l'activation du Guide de Programme, etc. De nombreux réglages comme celui de l'image s'effectue au niveau de l'écran de télévision, de sorte que la télécommande du décodeur comprenne peu de fonctions et donc peu de touches. Si par la suite, on veut doter le décodeur de fonction supplémentaire, il faut rendre plus complexe le Guide. De plus, en cas de perte, les rares boutons en face avant du décodeur n'autorisent qu'un minimum de fonction. Les services apportés par le décodeur sont alors très réduits. La présente invention permet d'apporter des moyens nouveaux de communication avec un appareil doté d'un lecteur de carte à puce, peu coûteux, et ne perturbant pas le déroulement normal des échanges avec la carte à puce.

WO98/14916 décrit une carte à circuit avec au moins deux circuits électroniques.

L'objet de la présente invention est un procédé de commutation de voies de communication permettant à un lecteur de cartes à circuits électroniques de communiquer avec plusieurs circuits de la carte introduite dans le lecteur, chaque circuit disposant d'une voie de communication caractérisé en ce qu'il comprend les étapes :
- application d'une tension d'alimentation sur la carte par des contacts électriques disposés sur un bouton de connexion,
- émission par le lecteur d'un signal de commande de la commutation des voies de communication sur un contact électrique situé dans la partie insérée de la carte mais pas sur le bouton,
- commutation d'une voie de communication d'un circuit permettant à celui-ci de communiquer via le bouton de connexion.

De cette façon, le lecteur peut sélectionner le circuit de la carte introduite avec qui il veut communiquer. L'émission du signal de commutation sur un contact électrique situé dans la partie insérée de la carte mais pas sur le bouton permet de ne pas utiliser des plots de la carte dont l'utilisation est normalisée.

Selon un premier perfectionnement, le procédé comporte une étape de détection d'un signal sur le contact électrique de la carte indiquant la présence d'une unité de commutation. De cette manière, le lecteur reconnaît si la carte introduite dispose d'un ou plusieurs circuits et d'un moyen de commutation permettant de dialoguer avec chacun d'eux. Selon un autre perfectionnement, le signal de commande est constitué d'une pluralité de signaux élémentaires dont le nombre détermine la position de commutation. De cette manière, la commutation s'effectue par le comptage de ces signaux élémentaires.

Selon un autre perfectionnement, la commutation s'applique en outre aux signaux de contrôle de communication tel que Clock et Reset. De cette façon, le lecteur peut activer individuellement chaque circuit.

L'objet de l'invention est aussi un dispositif amovible conçu pour être inséré dans un lecteur de carte à puce, comprenant une première partie s'insérant dans le lecteur comportant un bouton de connexion électrique ; caractérisé en ce qu'il comprend une seconde partie accessible à l'extérieur du lecteur comprenant : une pluralité de circuits destinés à transmettre des données à l'extérieur dudit lecteur , la communication avec la pluralité de circuits étant gérée par une unité de gestion utilisant des signaux transmis par le bouton de connexion et communiquant avec le lecteur à l'aide d'un contact électrique situé dans la partie insérée du dispositif mais pas sur le bouton de connexion.

Selon un premier perfectionnement, le dispositif comporte un moyen d'émission d'un signal sur le contact électrique indiquant la présence du circuit de commutation. De cette manière, la carte peut transmettre à l'extérieur l'indication si elle est dotée ou non d'un circuit de commutation. Selon un autre perfectionnement, le circuit de commutation comporte au moins un second circuit pour la commutation de signaux de contrôle tels que Clock et Reset. De cette façon, les circuits présents sur la carte peuvent être activés individuellement.

Selon un autre perfectionnement, le dispositif comporte plusieurs logements pour l'introduction de carte à puce. Les logements sont dotés de connecteurs pour la communication avec une carte insérée. La broche I/O de chaque connecteur étant connecté à un plot de commutation du circuit de commutation. De cette manière, le dispositif permet la communication entre un lecteur et plusieurs cartes à puces. Selon un perfectionnement, chacun de ces logements comporte un détecteur pour la détection d'une carte. Un circuit de gestion traitant les signaux provenant des détecteurs et transmettant les informations traitées par l'intermédiaire d'un plot du bouton de connexion.

Selon un autre perfectionnement, le dispositif comporte un moyen d'introduction de commandes et/ou d'affichage, une position du commutateur permettant la communication entre le plot (I/O) du bouton et lesdits moyens d'introduction et/ou d'affichage. De cette manière, le dispositif peut servir d'interface de communication avec l'utilisateur. Selon un autre perfectionnement, la position du contact électrique caractérise des catégories de dispositifs. De cette manière, on peut définir des couples de lecteurs et de cartes coopérant uniquement ensemble.

L'objet de l'invention est aussi un appareil lecteur de carte à puce comportant un logement comprenant un connecteur muni de contacts électriques coopérant avec les plots d'un bouton de connexion d'une carte insérée dans ledit logement, et un détecteur de présence carte dont la tension varie lors de l'insertion d'une carte ; caractérisé en ce que ledit détecteur dispose d'une partie métallique susceptible d'entrer en contact contact avec une partie métalique de la carte introduite, et en ce que l'appareil comporte un moyen de communication transmettant des données par le détecteur de présence carte.

L'invention, avec ses caractéristiques et avantages, ressortira plus clairement à la lecture de la description d'un exemple de réalisation particulier non limitatif fait en référence aux dessins annexés dans lesquels :
- la figure 1 présente un schéma synoptique d'un lecteur montrant les principales connexions avec une carte à puce selon un exemple préféré de réalisation,
- la figure 2 présente schématiquement un exemple de réalisation de la carte selon l'invention,
- la figure 3 présente un chronogramme montrant l'évolution des principaux signaux échangés lors de la mise sous tension d'une carte selon un exemple de réalisation,
- la figure 4 est un schéma d'une carte gigogne, selon une variante d'un exemple de réalisation.
- la figure 5 présente schématiquement un exemple de réalisation de la carte gigogne,
- la figure 6 présente schématiquement un exemple de réalisation de la carte gigogne en montrant les principales liaisons électriques,
- la figure 7 présente un diagramme temporel montrant l'évolution du signal détectant sur l'interrupteur de présence carte lors de l'insertion d'une carte à microprocesseur classique,
- la figure 8 présente un diagramme temporel montrant l'évolution du signal détectant sur l'interrupteur de présence carte lors de l'introduction d'une carte gigogne sans introduction d'une carte à puce dans le logement.

La figure 9 présente un diagramme temporel montrant l'évolution du signal électrique lors de l'introduction d'une carte gigogne puis lors de l'introduction d'une carte à puce dans le logement.

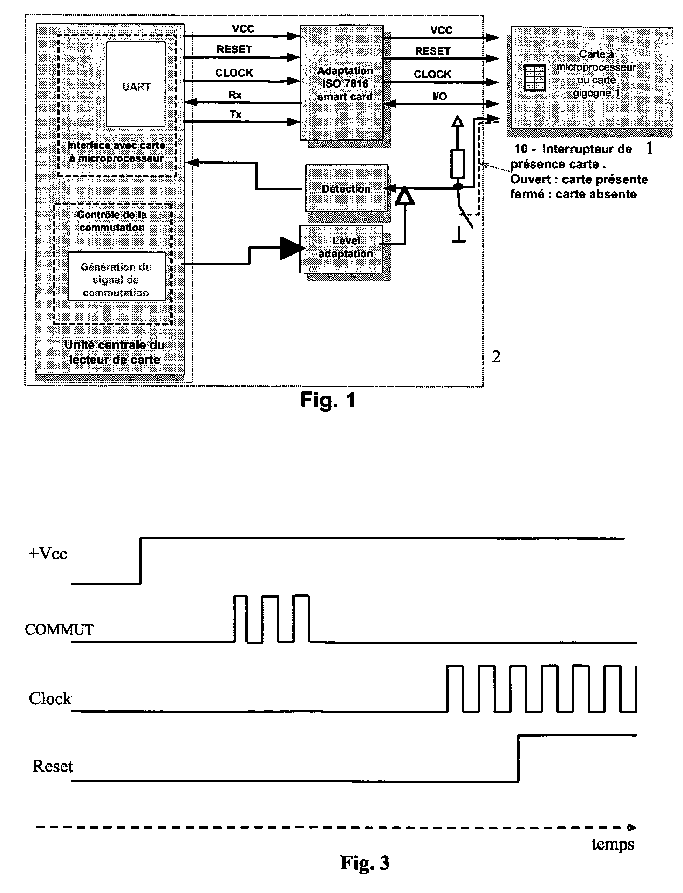

La figure 1 est un schéma synoptique d'un lecteur 2 montrant les principales connexions avec une carte à puce 1. Le lecteur 2 dispose d'une fente qui donne accès à un logement contenant un ensemble de connecteurs coopérant les plots de la carte lorsque celle est introduite en butée au fond du logement.

La carte à puce 1 possède un bouton de connexion équipé de plots normalisés selon l'ISO 7816-3. On trouve :
- GND et +Vcc : alimentation électrique (5 volts ou 3 volts),
- Reset : signal de remise à zéro du microprocesseur,
- Clock : signal d'horloge pour cadencer le microprocesseur,
- Vpp : tension (21 à 25 Volts) pour des cartes à EPROM (inusité),
- I/O : ligne bidirectionnelle de transmission de données,
- AUX1, AUX2 : signaux utilisés pour des cartes à sécurité type NDS.

Les connecteurs coopérant avec le bouton étant généralement des contacts glissants, et les plots étant positionnés sur deux rangées, il serait destructeur pour le microprocesseur que des signaux électriques soient appliqués sur les plots lorsque la carte est en cours d'insertion. Un interrupteur de présence carte 10 placé au fond du logement détecte lorsque la carte est introduite à fond. Le signal émis par l'interrupteur 10 déclenche l'activation des signaux +Vcc, Clock, Reset selon un ordre précis, spécifié par la norme ISO 7816-3. Suite à cela, le microprocesseur de la carte est activé et émet la « Réponse au Reset » sur la ligne I/O. D'autres protocoles sont envisageables, notamment pour des cartes synchrones.

Selon une façon particulièrement économique et répandue, l'interrupteur de présence carte 10 est constitué de deux lamelles de métal qui, en l'absence de carte sont en contact électrique. Lorsqu'une carte est complètement introduite, son arête plie une des lamelles qui rompt le contact avec l'autre lamelle. La lamelle en contact avec la carte est électriquement reliée à une résistance dit « pull up » connectée au +Vcc du lecteur et à un circuit de mise en forme pour la détection des niveaux électriques en vue de leur traitement par l'unité centrale du lecteur de carte. La disparition d'un niveau GND (0 volts) est l'indication de la présence d'une carte. Le niveau détecté indique si c'est une carte avec ou sans contact électrique coopérant avec l'interrupteur 10. Dès que la carte est retirée du lecteur, la lamelle revient en contact avec l'autre lamelle qui est reliée au GND, c'est-à-dire le zéro électrique. En l'absence de carte, le signal provenant est 0 volts.

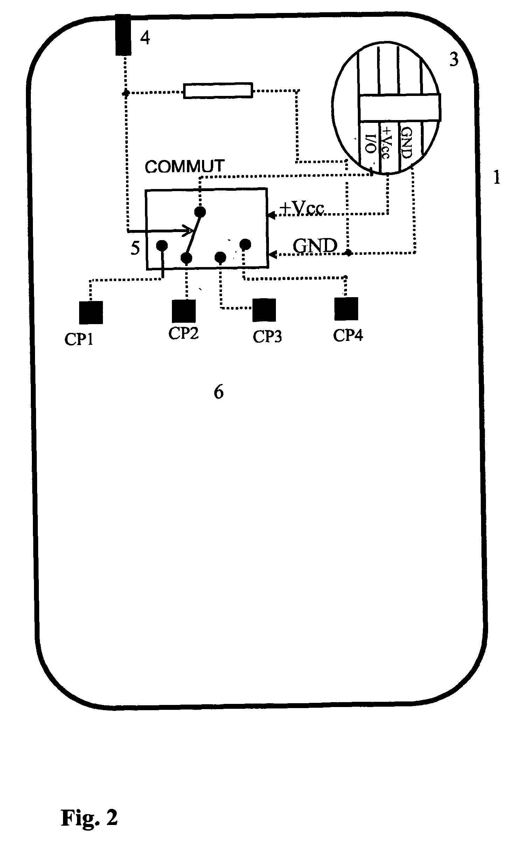

La figure 2 présente une carte 1 selon un premier exemple préféré de réalisation. La carte est équipée d'un bouton 3 comprenant des plots de connexion selon la norme ISO 7816. Une bande métallique 4 de 2.5 mm est positionnée sur l'arête de la carte de façon à entrer en contact avec l'interrupteur de présence carte au fond du logement d'un lecteur de carte. La carte comporte également plusieurs circuits intégrés dont des microprocesseurs 6, appelés CP1, CP2, CP3 et CP4, et un circuit commutateur à quatre positions appelé COMMUT. Chaque microprocesseur 6 dispose d'une ligne I/O pour la communication unidirectionnelle ou bidirectionnelle. Les signaux GND, +Vcc, RESET et Clock alimentent toutes les unités centrales. La ligne I/O du plot est reliée au commutateur COMMUT, ainsi que les différentes lignes de communication I/0i des microprocesseurs 6 CP1, CP2, CP3.... Le commutateur possède autant de position qu'il y a de circuits 6 avec qui le lecteur peut communiquer. Selon un exemple préféré de réalisation, le signal de commutation permettant de sélectionner la ligne I/Oi communiquant avec le lecteur est fourni par le contact supplémentaire 4 qui ne se trouve pas sur le plot normalisé ISO. Le contact supplémentaire 4 est électriquement relié à l'entrée de commande du commutateur COMMUT.

Selon un perfectionnement non représenté dans la figure 2, le commutateur COMMUT dispose d'un triple circuit de commutation, ce qui permet de commuter en plus de la ligne I/O, les lignes Clock et Reset. De ce fait, les broches Clock et reset ne sont plus connectées aux plots du bouton 4 comme précédemment, mais reliés aux secondes et troisième bornes du second et troisième circuit du commutateur 5. Afin de maintenir constants les niveaux électriques, tous les niveaux électriques des broches Clock et Reset des circuits 6 sont maintenus au 0 volt par une résistance. Grâce à ce perfectionnement, le lecteur peut activer séparément chaque circuit 6.

Après avoir détaillé les divers éléments, nous allons maintenant décrire comment ceux-ci coopèrent avec l'aide du chronogramme de la figure 3.

L'unité centrale du lecteur analyse en permanence le niveau électrique présent sur l'interrupteur de présence carte 10. Si la carte ne dispose pas de contact électrique, la tension détectée sur l'interrupteur de présence carte est +Vcc. La mise sous tension de la carte s'effectue alors de façon classique. Si la tension détectée sur l'interrupteur de présence carte est une tension intermédiaire, 2.5 volts par exemple, cela signifie qu'il existe un courant électrique traversant la résistance de pull up du lecteur et une résistance implantée sur la carte. Puis, l'unité centrale du lecteur applique la tension d'alimentation +VCC sur le plot de la carte 1. A ce moment le commutateur COMMUT est alimenté, sa position par défaut à sa mise sous tension est de connecter I/O1 du circuit CP1 avec le plot I/O du bouton. Si le lecteur désire dialoguer avec le circuit CP1, il n'a pas besoin d'envoyer de signal de commutation. Si le lecteur désire dialoguer avec un autre microprocesseur alors il envoie sur l'interrupteur de présence carte 10 une séquence formée d'un nombre déterminé d'impulsions. A chaque impulsion, le commutateur change de position, au bout de deux impulsions I/O du plot est relié à I/O2 du CP2, au bout de trois : I/O3 du CP3, etc. Grâce à l'utilisation d'un interrupteur de présence carte métallique, la transmission d'un signal de commutation de canaux de communication ne nécessite pas de modifier les caractéristiques matérielles du lecteur.

Une variante de réalisation de ce premier exemple de réalisation consiste à appliquer une tension déterminée sur l'interrupteur de présence carte 10. La position du commutateur dépend directement de la valeur de la tension appliquée. Par exemple, si la tension se situe entre 1 et 2 volts, le commutateur relie électriquement I/O1 du circuit CP1 avec le plot I/O du bouton. Si la tension se situe entre 2 et 3 volts, le commutateur relie électriquement I/O2 du circuit CP2 avec le plot I/O du bouton, entre 3 et 4 volts, c'est I/O3 du circuit CP3 et entre 4 et 5 volts, c'est I/O4 du circuit CP4. Cette variante présente l'avantage que l'application d'une nouvelle tension modifie immédiatement la position du commutateur.

Un perfectionnement de ce premier exemple de réalisation consiste en ce que la carte introduite dans le lecteur est une carte gigogne comportant une interface avec l'utilisateur et plusieurs connecteurs pour la communication avec plusieurs cartes à puce.

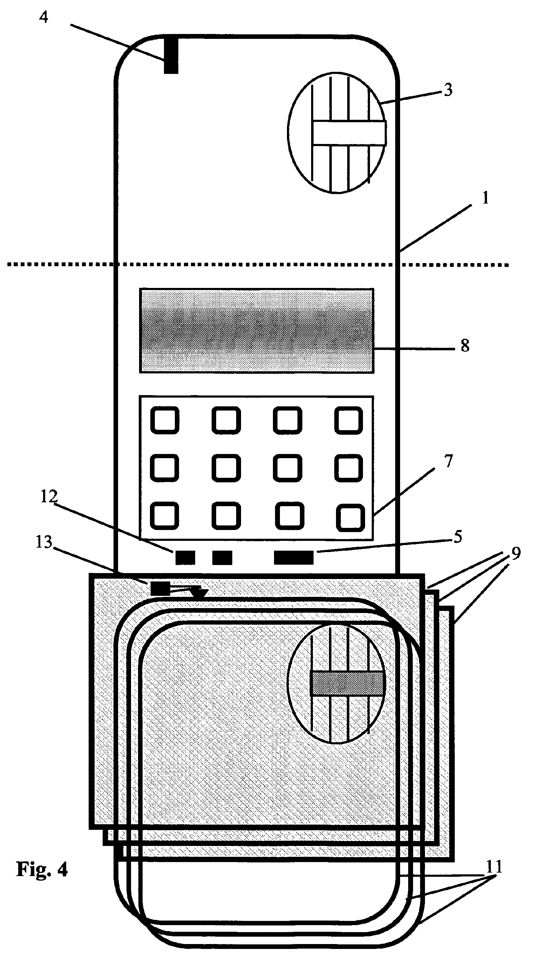

Un autre exemple de réalisation de la carte gigogne est présenté schématiquement par la figure 4. La carte gigogne qui porte la même référence 1 que la carte décrite dans la figure 3 est constituée d'une plaque en époxy ayant la même épaisseur qu'une carte à microprocesseur (0.9 mm). Une première différence consiste en ce que la totalité ou une partie des microcontrôleurs 6 sont remplacés par des cartes à puce 11. La limite de la partie s'insérant dans le lecteur est représentée par une ligne en pointillé. Le bouton 3 supporte les connexions normalisées ISO 7816. Une bande métallique 4 de 2.5 mm fixée sur l'arête de la carte vient s'appliquer sur l'interrupteur de présence carte au fond du logement du lecteur de carte. La carte gigogne comporte une première partie qui est introduite dans le lecteur et une seconde qui reste accessible à l'utilisateur. La limite entre les deux parties est représentée par une ligne en pointillé sur la figure3. Cette seconde partie comprend un clavier 7 comprenant des touches accessibles à un utilisateur, un afficheur 8 et trois logements 9 empilés les uns sur les autres permettant d'insérer au maximum trois cartes 11 à microprocesseur. Les plots GND, +Vcc, RESET et Clock du bouton 3 sont électriquement reliés aux broches correspondantes des trois connecteurs à l'intérieur des trois logements 9, de sorte que ces plots sont électriquement reliés aux plots correspondant des cartes 11 introduites dans les logements 9. La ligne I/O du bouton 3 est reliée au commutateur COMMUT 5, ainsi que les broches I/O des trois connecteurs à l'intérieur des trois logements. Le commutateur 5 possède quatre positions, le plot correspondant à la première position est relié à un circuit de gestion du clavier 12, ce circuit est avantageusement un microcontrôleur. Les trois autres plots sont reliés chacun à la broche I/O de chacun des trois connecteurs à l'intérieur des trois logements 9. Le contact supplémentaire 4 est électriquement relié à l'entrée de commande du commutateur COMMUT de façon que le signal de commutation émis par le lecteur sélectionne la ligne I/Oi du circuit avec qui il désire communiquer.

Chaque logement possède un interrupteur de présence carte 13. Un plot de l'interrupteur est relié au GND, l'autre à une résistance reliée au +Vcc. En l'absence de carte, l'interrupteur est fermé et la tension à sa borne est de 0 volts. L'apparition d'un signal d'un niveau +Vcc sur l'interrupteur 13 signifie qu'une carte est complètement introduite dans le logement 9. Les trois interrupteurs 13 sont reliés au circuit de gestion du clavier 12. De cette façon, le circuit de gestion reçoit l'information si des cartes sont introduites dans les logements et peut la fournir au lecteur lorsque celui-ci lui demande.

La carte gigogne peut également supporter des moyens d'émissions sonores tels qu'un haut-parleur et un buzzer. Le circuit de gestion du clavier 12 réalisant la gestion du clavier 7, de l'écran 8 et la présence des cartes 11 se situe de façon privilégiée hors de la zone d'insertion dans le lecteur, là où il n'y a pas de contrainte d'épaisseur. Ceci n'exclut pas qu'il soit dans la zone d'insertion, en respectant l'épaisseur maximale de 0.9 mm. Les fils de connexion entre le bouton 3, l'élément électrique 4, le commutateur 5, le circuit de gestion 12, et les connecteurs des logements 9 sont de façon préférée réalisés sous forme de dépôt de cuivre sur la plaque d'époxy, les dépôts sot ensuite recouverts d'élément isolant. La carte gigogne peut également supporter un module de sécurité. Un module de sécurité est un circuit du même type que celui d'une carte à microprocesseur, avec des fonctions sécuritaires supplémentaires.

Une utilisation de la carte gigogne consiste en ce que le lecteur exécute une application de télé-achat avec l'aide d'un réseau de diffusion payant. Un premier logement contient la carte privative d'accès au réseau de diffusion, cette carte contient les droits de visualisation des programmes audiovisuels. Un second logement est destiné à recevoir une carte bancaire. Elle permet d'effectuer le paiement d'un objet sélectionné lors d'un programme de télé-achat.

De même que pour la carte décrite par la figure 3, un perfectionnement consiste en ce que le commutateur COMMUT possède un triple circuit de commutation. De cette façon, les broches Clock et Reset des connecteurs 9 ne sont plus connectées aux plots correspondant du bouton 4 comme précédemment, mais électriquement reliés aux second et troisième circuit du commutateur 5. Afin de maintenir constants les niveaux électriques, tous les niveaux électriques des broches Clock et Reset des connecteurs installés dans chaque logement 9 sont maintenus au GND par une résistance. Grâce à ce perfectionnement, le lecteur peut activer séparément chaque carte 11 insérée dans chaque logement 9.

Selon un autre perfectionnement, la position de l'arête électrique de la carte et la position de l'interrupteur de présence carte sont disposées à un emplacement déterminé. La partie rectiligne de la largeur d'une carte étant de 48 mm, il est possible de disposer une arête électrique tous les 3 mm, ce qui fait 16 positions possibles. En toute rigueur, pour pouvoir effectuer la commutation, il faut que le contact de la carte soit face à la partir métallique de l'interrupteur de présence carte. S'ils ne le sont pas, aucun contact électrique ne se fait, et la carte sera traitée de façon classique. A l'aide de ce perfectionnement, on peut définir des couples de lecteurs coopérant uniquement avec certains modèles de cartes gigognes.

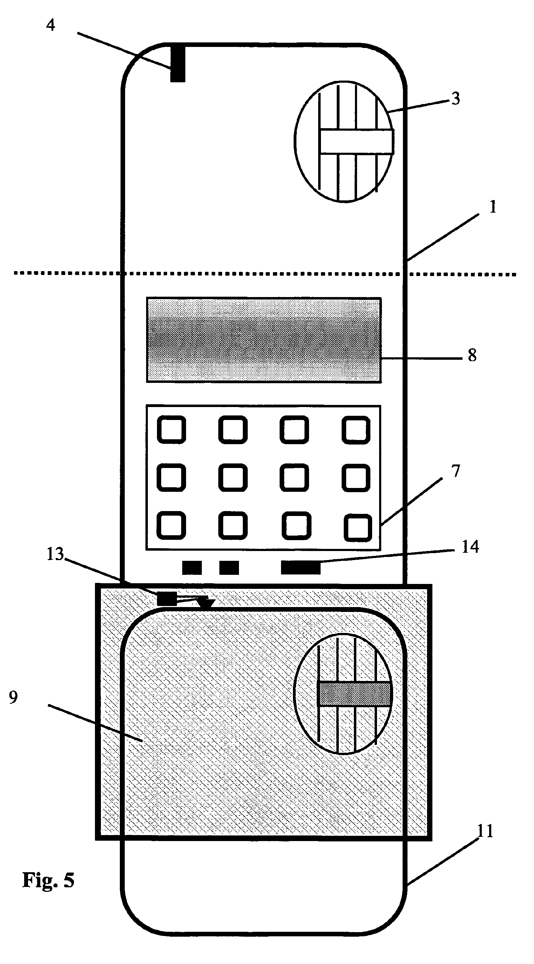

Un autre exemple de réalisation de la carte gigogne est présenté schématiquement par la figure 5. Une première différence par rapport à l'exemple illustré par la figure 4 consiste en ce que le commutateur 5 est remplacé par un circuit de gestion 14 de la carte, ce circuit recevant des données de communication par la bande métallique 4. Le bouton 3 supporte les connexions normalisées ISO 7816. Une bande métallique 4 de 2.5 mm est fixée sur l'arête de la carte à l'emplacement qui vient s'appliquer sur l'interrupteur de présence carte 10 lorsque la carte est au fond du lecteur. La partie de la carte gigogne qui reste accessible comporte également un logement 9 pour l'insertion d'une carte à microprocesseur 11. Ce logement dispose d'un interrupteur de présence carte 13. Cet interrupteur est relié d'une part au contact électrique 4 et d'autre part à une résistance connectée au GND. En présence d'une carte 11 dans le logement 9, l'interrupteur 13 est fermé de sorte que le niveau électrique présent sur le contact électrique 4 est abaissé d'une certaine valeur, typiquement 1.5 volts si +Vcc est égal à 5 volts.

Des éléments de contact normalisés ISO 7816 dans le logement et des lignes électriques reliées aux plots du bouton 3 assurent la continuité électrique entre la carte à microprocesseur introduite 11 et le bouton 3. De cette manière, le lecteur peut lire la carte à puce 11 comme si elle était directement introduite. La carte gigogne 1 dispose d'un clavier 7 comprenant des touches éventuellement sérigraphiées. D'autres éléments d'acquisition de commandes ou d'introduction de valeurs (commutateur, mini-dip, potentiomètre, pavé décimal, ..) sont possibles. Selon un perfectionnement, la carte gigogne 1 dispose également d'un afficheur 8, typiquement un écran LCD. La carte 1 peut également supporter des moyens d'émissions sonores tels qu'un haut-parleur et un buzzer. Le microcontrôleur 14 réalisant la gestion du clavier 7, de l'écran 8 et de la communication via l'élément électrique 4 se situe de façon privilégiée hors de la zone d'insertion dans le lecteur, il n'a donc pas de contrainte d'épaisseur. Ceci n'exclut pas qu'il soit dans la zone d'insertion, en respectant l'épaisseur maximale de 0.9 mm. Les fils de connexion entre le bouton 3, l'élément électrique 4, le microcontrôleur 14 et le connecteur dans le logement 9 sont réalisés sous forme de dépôt de cuivre sur la plaque d'époxy, les fils sont recouverts d'un élément isolant.

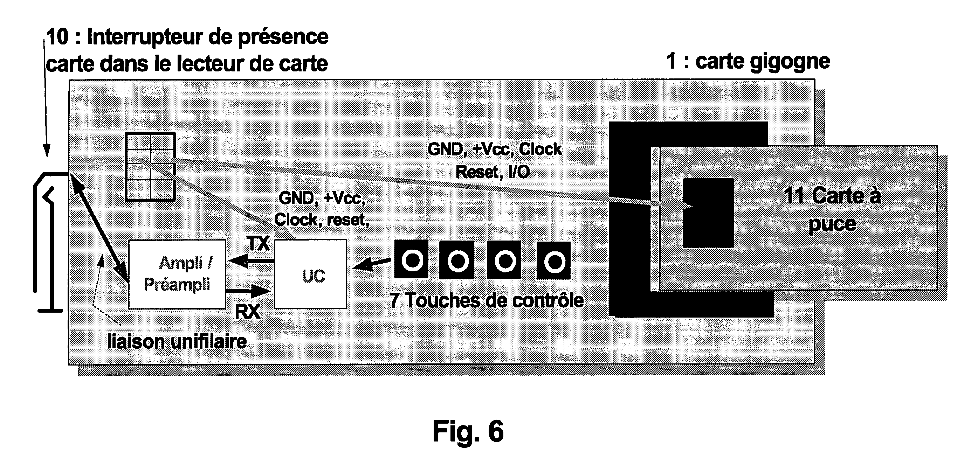

La figure 6 montre les différentes liaisons électriques entre les composants électriques de la carte gigogne. Le microcontrôleur 14 est relié aux plots du bouton 3 afin d'assurer son alimentation électrique, l'horloge et le signal de RESET, aux éléments d'interface utilisateur 7 et 8 et à l'élément métallique 4. Un composant entre le microcontrôleur et l'élément métallique 4 peut être nécessaire pour l'adaptation de niveau et la sécurité contre les courts-circuits. Si la liaison est bidirectionnelle et si le microcontrôleur dispose de deux lignes de communication, celles-ci sont alors reliées à deux composants pour l'adaptation de niveaux et la réalisation d'une ligne de communication « hall duplex ».

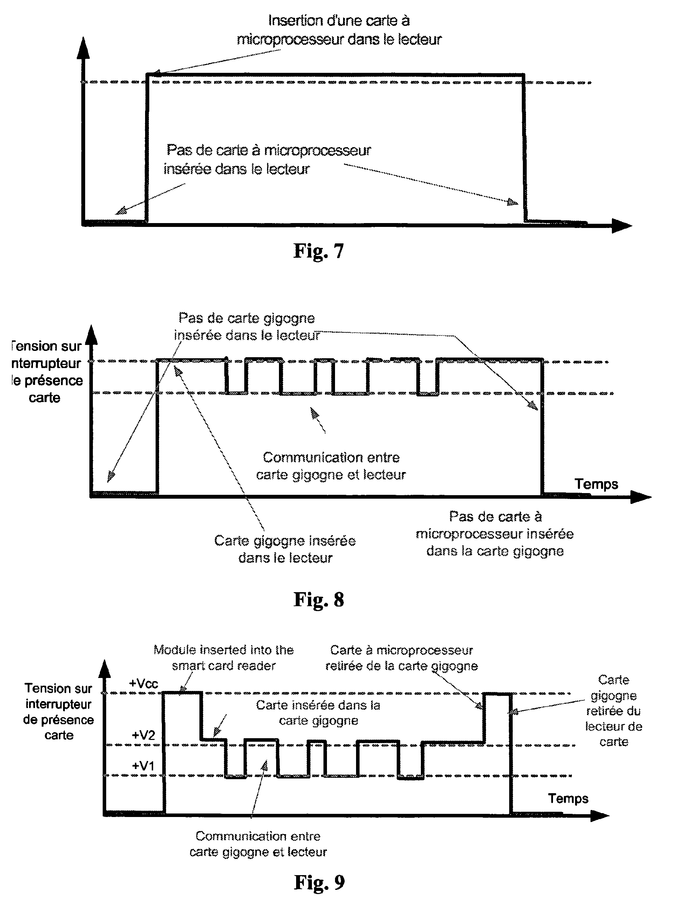

Voyons maintenant comment le lecteur peut détecter la présence de la carte gigogne selon ce nouvel exemple de réalisation et la présence d'une carte à puce dans son logement. Les figures 7, 8 et 9 sont des diagrammes temporels décrivant l'évolution des signaux électriques présents sur l'interrupteur de présence carte et transmis à l'unité de gestion du lecteur. La figure 7 décrit l'insertion d'une carte à microprocesseur classique. Au départ, le niveau électrique est 0 volt, ce qui signifie qu'aucune carte n'est introduite. Puis le niveau s'élève à +Vcc indiquant l'introduction d'une carte. Le niveau reste ensuite à +Vcc ce qui signifie qu'il n'y a pas de carte gigogne. Enfin le niveau retombe à « 0 » lorsque la carte est retirée.

La figure 8 décrit l'évolution du signal électrique lors de l'introduction d'une carte gigogne sans introduction d'une carte à puce dans le logement. Comme pour la figure 7, le niveau électrique passe à +Vcc lors de l'introduction de la carte gigogne, puis le niveau oscille entre +Vcc et une valeur +V2 indiquant que le microcontrôleur est en train d'émettre une donnée ou plus généralement qu'une communication s'instaure entre le lecteur et le microcontrôleur. Dans le mode simplifié de réalisation où la carte gigogne ne contient qu'un clavier, l'apparition d'un niveau +V2 pendant une durée déterminée indique l'émission d'un bit de départ (« start bit » en anglais), les huit bits de données sont ensuite émis en série. Avantageusement, un bit de parité et un bit de fin (« end bit » en anglais) termine l'émission de la donnée.

La figure 9 décrit l'évolution du signal électrique lors de l'introduction d'une carte gigogne puis lors de l'introduction d'une carte à puce dans le logement. Le niveau électrique passe à +Vcc lors de l'introduction d'une carte gigogne, puis passe à +V2 lors de l'insertion d'une carte à puce. La chute de tension de +Vcc à +V2 est du à la fermeture de l'interrupteur de présence carte 13 et à la résistance connectée au GND. Le maintien pendant une longue durée (au moins dix fois plus que celle de l'émission d'un bit) au niveau +V2 indique au lecteur qu'une carte à microprocesseur vient d'être introduite dans le logement. Dès que le lecteur détecte un tel passage à +V2, il sait qu'une carte à puce a été insérée dans le logement et déclenche une nouvelle remise à zéro. A la suite de quoi, si tout fonctionne bien, il doit recevoir les octets de RAZ sur la liaison I/O du plot de connexion. Si la ligne I/O n'émet aucun octet, la carte est muette, soit à cause d'un blocage de sécurité, ou d'un disfonctionnement de la carte. Lorsque le microcontrôleur communique avec le lecteur, les niveaux électriques vont osciller entre une valeur maximum de +V2 et une valeur minimum de +V1. Dès que la tension remonte à +Vcc, le lecteur sait que la carte à microprocesseur a été retirée.

Afin de détecter les différents seuils +Vcc, +V2 et +V1, la lamelle en contact avec la carte est connectée à des détecteurs de seuils. Selon un mode simplifié de réalisation, les seuils sont réglés à trois tensions intermédiaires VA, V_{B} et V_{C}. VA est un niveau électrique entre 0 volt et +V1, V_{B} est un niveau électrique entre +V1 et +V2 et V_{C} est un niveau électrique entre +V2 et +Vcc. Les comparateurs sont cascadés de façon à fournir une valeur binaire sur 2 lignes connectées à l'unité de gestion du lecteur. La valeur binaire des deux lignes informe le coupleur de la valeur de tension de l'interrupteur de présence carte. Cette analyse des valeurs s'effectue en prenant en compte les tensions et signaux appliqués aux plots de connexion ISO 7816. Dans un premier temps, aucune tension n'est appliquée. Une valeur « 00 » transmise par les comparateurs signifie qu'aucune carte n'est introduite, sinon une carte est dans le lecteur. Dans ce dernier cas, l'unité de gestion du lecteur applique les signaux sur le plot de connexion selon la norme 7816. La sortie des comparateurs prend alors les valeurs suivantes : Si « 01 » alors le niveau est supérieur à VA et inférieur à V_{B} indiquant qu'une carte gigogne et une carte à microprocesseur sont dans le lecteur et qu'un bit à « 0 » est transmis. Si « 10 » alors le niveau est supérieur à V_{B} et inférieur à V_{C} indiquant soit qu'une carte gigogne et une carte à microprocesseur sont dans le lecteur et la liaison au repos ou un bit à « 1 » en cours de transmission, soit qu'une carte gigogne sans carte à microprocesseur est dans le lecteur et un bit à « 0 » en cours de transmission. Si « 11 » alors le niveau est supérieur à V_{C} indiquant soit la présence d'une carte à microprocesseur seule, soit la présence d'une carte gigogne sans carte à microprocesseur et la liaison au repos ou un bit à « 1 » en cours de transmission. Dès que la valeur des comparateurs change entre « 01 » et « 10 » ou entre « 10 » et « 11 » alors le lecteur peut en déduire la présence ou non de la carte gigogne et la présence ou non de la carte à microprocesseur.

Selon le dernier exemple de réalisation, si la carte gigogne dispose d'un moyen d'émission de signaux, par exemple un écran LCD, ou des diodes LED, ou encore un buzzer alors la liaison avec le microcontrôleur est bidirectionnelle. De cette façon, le lecteur peut recevoir les codes des touches enfoncées et émettre des informations à afficher.

Selon un autre perfectionnement du dernier exemple de réalisation, la position de l'arête électrique de la carte et la position de l'interrupteur de présence carte sont disposées à un emplacement déterminé. La partie rectiligne de la largeur d'une carte étant de 48 mm, il est possible de disposer une arête électrique tous les 3 mm, ce qui fait 16 positions possibles. En toute rigueur, pour assurer la communication il faut qu'ils soient face à face, mais ce n'est pas nécessaire pour détecter uniquement la présence d'une carte. De ce fait, on peut implémenter différents modèles de lecteurs coopérant avec des modèles de cartes gigognes spécifiques.

Les présents modes de réalisation doivent être considérés à titre d'illustration mais peuvent être modifiés dans le domaine défini par la portée des revendications jointes. En particulier, d'autres façons de détecter un contact électrique sur une carte à puce sont envisageables en ne s'écartant pas de la portée de la présente invention. En particulier, l'invention ne se limite pas aux décodeurs de télévision mais peut s'appliquer à tout dispositif possédant un lecteur de carte à microprocesseur.

## Revendications

1. Procédé de commutation de voies de communication permettant à un lecteur de cartes à circuits électroniques (2) de communiquer avec plusieurs circuits de la carte introduite dans le lecteur, chaque circuit disposant d'une voie de communication ; le procédé comprenant les étapes suivantes:
- application d'une tension d'alimentation sur la carte par des contacts électriques disposés sur un bouton de connexion (3), **caractérisé en ce que** le procédé comprend l'étape suivante :
- émission par le lecteur (2) d'un signal de commande de la commutation des voies de communication sur un contact électrique (4) situé dans la partie insérée de la carte mais pas sur le bouton,
- commutation d'une voie de communication d'un circuit permettant à celui-ci de communiquer via le bouton de connexion (3).

2. Procédé de commutation de voies de communication selon la revendication 1, **caractérisé en ce qu'**il comporte une étape de détection d'un signal sur le contact électrique de la carte indiquant la présence d'une unité de commutation.

3. Procédé de commutation de voies de communication selon la revendication 1 ou 2, **caractérisé en ce que** le signal de commande émis comporte une pluralité de signaux élémentaires dont le nombre détermine la position de commutation.

4. Procédé de commutation de voies de communication selon l'une quelconque des revendications 1 à 3, **caractérisé en ce que** le signal de commutation commute également des signaux de contrôle de communication tel que Clock et Reset.

5. Dispositif amovible (1) conçu pour être inséré dans un lecteur de carte à puce (2), comprenant une première partie s'insérant dans le lecteur comportant un bouton de connexion 3 électrique, le dispositif comprenant une seconde partie accessible à l'extérieur du lecteur (2) comprenant : une pluralité de circuits (7,8 ; 11) destinés à transmettre des données à l'extérieur dudit lecteur, **caractérisé en ce que** une unité de gestion (5; 14) est adaptée pour gérer la communication de la pluralité de circuits (7, 8; 12) vers le lecteur (2) par la commutation d'une voie de commutation d'un des circuits vers le bouton de connexion (3) à l'aide d'un signal généré par le lecteur sur un contact électrique (4) situé dans la partie insérée du dispositif mais pas sur le bouton de connexion (3).

6. Dispositif amovible selon la revendication 1, **caractérisé en ce que** la seconde partie comporte au moins un logement (9) conçu pour l'introduction d'une carte à puce, ledit logement comportant des contacts électriquement reliés aux contacts du bouton de connexion (3) permettant de communiquer avec une carte introduite dans le logement.

7. Dispositif électronique portable selon la revendication 5 ou 6, **caractérisé en ce qu'**il comporte un moyen pour modifier la tension électrique présente sur le contact électrique (4) lorsqu'une carte (6) est présente dans le logement (9).

8. Dispositif amovible selon l'une quelconque des revendications 5 à 7, **caractérisé en ce qu'**au moins le plot Reset ou Clock du bouton de connexion (3) est électriquement relié à l'unité de gestion (5 ; 14) des moyens de communication.

9. Dispositif amovible selon l'une quelconque des revendications 5 à 8, **caractérisé en ce que** le protocole de communication via le contact électrique (4) est le même que celui de la carte à puce (6) introduite dans le logement (9) et communiquant via le bouton de connexion (3).

10. Dispositif électronique portable selon l'une quelconque des revendications 5 à 9, **caractérisé en ce que** le dispositif comporte une pluralité de logements (9) pour l'introduction de carte à puce, les logements étant dotés de connecteurs pour la communication avec une carte insérée, la broche I/O de chaque connecteur étant connecté à un plot de commutation de l'unité de gestion des moyens de communication (5 ; 14).

11. Dispositif électronique portable selon la revendication 10, **caractérisé en ce que** chaque logement (9) comporte un détecteur (13) pour détecter la présence d'une carte, le dispositif comporte un circuit de gestion de la présence de carte dans chaque logement.

12. Dispositif électronique portable selon l'une quelconque des revendications 5 à 9, **caractérisé en ce que** le dispositif comporte un moyen d'introduction de commandes (7) et/ou d'affichage (8), une position du commutateur permettant la communication entre le plot (I/O) du bouton (3) et lesdits moyens d'introduction et/ou d'affichage.

13. Dispositif amovible selon l'une quelconque des revendications 5 à 12, **caractérisé en ce que** le contact électrique (4) est positionné pour coopérer électriquement avec le détecteur de présence carte (10) du lecteur.

14. Dispositif amovible selon l'une quelconque des revendications 5 à 13, **caractérisé en ce que** la position du contact électrique (4) caractérise des catégories de dispositifs.

15. Lecteur (2) de carte à puce comportant un logement comprenant un connecteur muni de contacts électriques apte à coopérer avec les plots d'un bouton de connexion d'une carte insérée dans ledit logement, ladite carte comportant une pluralité de circuits (7,8 ; 11) communiquant à travers une voie de communication, et un détecteur de présence carte (10) dont la tension varie lors de l'insertion d'une carte, **caractérisé en ce que** ledit détecteur (10) dispose d'une partie métallique susceptible d'entrer en contact avec une partie métalique de la carte introduite, et **en ce que** le lecteur comporte un moyen de communication transmettant par le détecteur de présence carte (10) un signal de commande de la commutation des voies de communication permettant à un circuit de la carte de communiquer via un des plots du bouton de connexion.

16. Lecteur de carte à puce selon la revendication 15, **caractérisé en ce qu'**il comporte en outre un moyen d'émission d'un signal pour sélectionner un circuit de la carte insérée dans le logement.

17. Lecteur de carte à puce selon la revendication 16, **caractérisé en ce qu'**il comporte un moyen d'émission d'une pluralité de signaux élémentaires constituant le signal de commutation, le nombre de signaux élémentaires sélectionnant le circuit de la carte destiné à communiquer avec le lecteur (2).

18. Lecteur de carte à puce selon la revendication 15, **caractérisé en ce qu'**il comporte un moyen d'analyse de la tension sur le détecteur de présence carte (10) afin de déterminer si des données peuvent être transmises via le détecteur de présence carte (10).

19. Lecteur de carte à puce selon la revendication 15 ou 18, **caractérisé en ce que** le moyen de communication est bidirectionnel, les données envoyées par le détecteur de présence carte (10) étant destinées à être émises par la carte à destination d'un utilisateur.

20. Lecteur de carte à puce selon l'une quelconque des revendications 15 à 19, **caractérisé en ce que** la position du détecteur de présence carte (13) dans le logement permet de définir des catégories de cartes destinées à dialoguer avec ledit lecteur.

## Claims

1. A method of switching communication channels enabling a smartcard reader (2) to communicate with several circuits of the card inserted into the reader, each circuit having a communication channel; the method comprising the following steps:
- application of a power supply voltage to the card by electrical contacts arranged on a connection button (3),
**characterized in that** the method comprises the following steps:
- transmission by the reader (2) of a control signal to control the switching of the communication channels on an electrical contact (4) located in the inserted part of the card but not on the button,
- switching of a communication channel for a circuit enabling said circuit to communicate via the connection button (3).

2. The method of switching communication channels as claimed in claim 1, **characterized in that** it comprises a step for detecting a signal on the electrical contact of the card indicating the presence of a switching unit.

3. The method of switching communication channels as claimed in claim 1 or 2, **characterized in that** the transmitted control signal comprises a plurality of individual signals, the number of which determines the switching position.

4. The method of switching communication channels as claimed in any one of claims 1 to 3, **characterized in that** the switching signal also switches communication control signals such as Clock and Reset.

5. A removable device (1) designed to be inserted into a smartcard reader (2), comprising a first part that is inserted into the reader comprising an electrical connection button (3), the device comprising a second part accessible from outside the reader (2) comprising: a plurality of circuits (7,8; 11) designed to transmit data outside of said reader, **characterized in that** a management unit (5; 14) is adapted for managing the communication of the plurality of circuits (7,8; 12) with the reader (2) by the switching of a communication path of one of the circuits to the connection button (3) with the help of a signal generated by the reader on a electrical contact (4) located in the inserted part of the device but not on the connection button (3).

6. The removable device as claimed in claim 1, **characterized in that** the second part comprises at least one recess (9) designed for a smartcard to be inserted, said recess comprising contacts electrically linked to the contacts of the connection button (3) enabling communication with a card inserted into the recess.

7. A portable electronic device as claimed in claim 5 or 6, **characterized in that** it comprises a means for modifying the electrical voltage present on the electrical contact (4) when a card (6) is present in the recess (9).

8. The removable device as claimed in any one of claims 5 to 7, **characterized in that** at least the Reset or Clock terminal of the connection button (3) is electrically linked to the management unit (5; 14) of the communication means.

9. The removable device as claimed in any one of claims 5 to 8, **characterized in that** the communication protocol via the electrical contact (4) is the same as that of the smartcard (6) inserted into the recess (9) and communicating via the connection button (3).

10. The portable electronic device as claimed in any one of claims 5 to 9, **characterized in that** the device comprises a plurality of recesses (9) for inserting smartcards, the recesses being provided with connectors for communication with an inserted smartcard, the I/O pin of each connector being connected to a switching terminal of the management unit of the communication means (5; 14).

11. The portable electronic device as claimed in claim 10, **characterized in that** each recess (9) comprises a detector (13) for detecting the presence of a smartcard, and the device comprises a circuit managing the presence of a smartcard in each recess.

12. The portable electronic device as claimed in any one of claims 5 to 9, **characterized in that** the device comprises a means of entering commands (7) and/or display means (8), a position of the switch enabling communication between the terminal (I/O) of the button (3) and said entry and/or display means.

13. The removable device as claimed in any one of claims 5 to 12, **characterized in that** the electrical contact (4) is positioned to cooperate electrically with the reader's smartcard presence detector (10).

14. The removable device as claimed in any one of claims 5 to 13, **characterized in that** the position of the electrical contact (4) characterizes device categories.

15. A smartcard reader (2) having a recess comprising a connector provided with electrical contacts able to cooperate with the terminals of a connection button on a card inserted into said recess, said card comprising a plurality of circuits (7,8 ; 11) communicating through a communication path, and a card presence detector (10) whose the voltage varies when the insertion of the card, **characterized in that** said detector (10) has a metallic part designed to come into contact with a metallic part of the inserted card, and **in that** the device comprises a communication means transmitting via the card presence detector (10) a signal of control of the switching of the communication paths allowing a circuit of the card to communicate via one of the terminals of a connection button.

16. The smartcard reader as claimed in claim 15, **characterized in that** it also comprises a means of transmitting a signal for selecting a circuit of the card inserted into the recess.

17. The smartcard reader as claimed in claim 16, **characterized in that** it comprises a means of transmitting a plurality of individual signals that make up the switching signal, the number of individual signals selecting the circuit of the card intended to communicate with the reader (2).

18. The smartcard reader as claimed in claim 15, **characterized in that** it comprises a means of analyzing the voltage on the card presence detector (10) in order to determine if data can be transmitted via the card presence detector (10).

19. The smartcard reader as claimed in claim 15 or 18, **characterized in that** the communication means is bidirectional, the data sent by the card presence detector (10) being intended to be transmitted by the card to a user.

20. The smartcard reader as claimed in any one of claims 15 to 19, **characterized in that** the position of the card presence detector (13) in the recess makes it possible to define categories of cards intended to dialog with said reader.

## Patentansprüche

1. Verfahren zur Schaltung von Kommunikationswegen, das es einem Leser von Karten mit elektronischen Schaltkreisen (2) ermöglicht, mit mehreren Schaltkreisen der in den Leser eingeführten Karte zu kommunizieren, wobei jeder Schaltkreis über einen Kommunikationsweg verfügt, wobei das Verfahren den folgenden Schritt umfasst:
- Anlegen einer Versorgungsspannung an die Karte durch elektrische Kontakte, die auf einer Verbindungstaste (3) angeordnet sind,
**dadurch gekennzeichnet, dass** das Verfahren die folgenden Schritte umfasst:
- ein Signal zur Steuerung der Schaltung der Kommunikationswege wird durch den Leser (2) auf einen elektrischen Kontakt (4), der auf dem eingeführten Abschnitt der Karte, jedoch nicht auf der Taste angeordnet ist, gesendet,
- Schaltung eines Kommunikationsweges eines Schaltkreises, welche es diesem Schaltkreis ermöglicht, über die Verbindungstaste (3) zu kommunizieren.

2. Verfahren zur Schaltung von Kommunikationswegen nach Anspruch 1, **dadurch gekennzeichnet, dass** es einen Schritt der Detektion eines Signals auf dem elektrischen Kontakt der Karte umfasst, welches das Vorhandensein einer Schaltungseinheit anzeigt.

3. Verfahren zur Schaltung von Kommunikationswegen nach Anspruch 1 oder 2, **dadurch gekennzeichnet, dass** das ausgesendete Steuerungssignal eine Vielzahl von Elementarsignalen aufweist, deren Anzahl die Schaltungsposition bestimmt.

4. Verfahren zur Schaltung von Kommunikationswegen nach einem der Ansprüche 1 bis 3, **dadurch gekennzeichnet, dass** das Schaltsignal ebenfalls Kommunikationskontrollsignale wie Clock und Reset schaltet.

5. Abnehmbare Vorrichtung (1), die ausgelegt ist, um in einen Chipkartenleser (2) eingeführt zu werden, mit einem ersten Abschnitt mit einer elektrischen Verbindungstaste (3), der in den Leser eingeführt wird, wobei die Vorrichtung einen zweiten Abschnitt aufweist, der außerhalb des Lesers (2) zugänglich ist und eine Vielzahl von Schaltkreisen (7, 8; 11) umfasst, die dazu bestimmt sind, Daten außerhalb des Lesers zu übertragen, **dadurch gekennzeichnet, dass** eine Verwaltungseinheit (5; 14) geeignet ist, um die Kommunikation der Vielzahl von Schaltkreisen (7, 8; 12) zu dem Leser (2) durch Schaltung eines Kommunikationsweges eines der Schaltkreise zu der Verbindungstaste (3) mit Hilfe eines Signals zu verwalten, das durch den Leser auf einem elektrischen Kontakt (4) erzeugt wird, der auf dem eingeführten Abschnitt der Vorrichtung, nicht jedoch auf der Verbindungstaste (3) angeordnet ist.

6. Abnehmbare Vorrichtung nach Anspruch 1, **dadurch gekennzeichnet, dass** der zweite Abschnitt mindestens eine Aufnahme (9) aufweist, die zum Einführen einer Chipkarte ausgelegt ist, wobei die Aufnahme Kontakte aufweist, die elektrisch mit den Kontakten der Verbindungstaste (3) verbunden sind und die Kommunikation mit einer in die Aufnahme eingeführten Karte ermöglichen.

7. Tragbare elektronische Vorrichtung nach Anspruch 5 oder 6, **dadurch gekennzeichnet, dass** sie ein Mittel aufweist, um die an dem elektrischen Kontakt (4) vorhandene elektrische Spannung zu ändern, wenn eine Karte (6) sich in der Aufnahme (9) befindet.

8. Abnehmbare Vorrichtung nach einem der Ansprüche 5 bis 7, **dadurch gekennzeichnet, dass** mindestens der Reset- oder der Clock-Pin der Verbindungstaste (3) mit der Verwaltungseinheit (5; 14) der Kommunikationsmittel elektrisch verbunden ist.

9. Abnehmbare Vorrichtung nach einem der Ansprüche 5 bis 8, **dadurch gekennzeichnet, dass** das Protokoll für die Kommunikation über den elektrischen Kontakt (4) dasselbe ist wie dasjenige der Chipkarte (6), die in die Aufnahme (9) eingeführt wird und über die Verbindungstaste (3) kommuniziert.

10. Tragbare elektronische Vorrichtung nach einem der Ansprüche 5 bis 9, **dadurch gekennzeichnet, dass** die Vorrichtung eine Vielzahl von Aufnahmen (9) zum Einführen einer Chipkarte aufweist, wobei die Aufnahmen mit Verbindern für die Kommunikation mit einer eingeführten Karte versehen sind, wobei der I/O-Pin jedes Verbinders mit einem Schaltpin der Verwaltungseinheit (5; 14) der Kommunikationsmittel verbunden ist.

11. Tragbare elektronische Vorrichtung nach Anspruch 10, **dadurch gekennzeichnet, dass** jede Aufnahme (9) einen Detektor (13) aufweist, um die Anwesenheit einer Karte zu detektieren, wobei die Vorrichtung einen Schaltkreis für die Verwaltung der Kartenanwesenheit in jeder Aufnahme aufweist.

12. Tragbare elektronische Vorrichtung nach einem der Ansprüche 5 bis 9, **dadurch gekennzeichnet, dass** die Vorrichtung ein Mittel zum Eingeben von Befehlen (7) und/oder zum Anzeigen (8) aufweist, wobei eine Schalterstellung die Kommunikation zwischen dem Pin (I/O) der Taste (3) und den Eingabe- und/oder Anzeigemittel ermöglicht.

13. Abnehmbare Vorrichtung nach einem der Ansprüche 5 bis 12, **dadurch gekennzeichnet, dass** der elektrische Kontakt (4) positioniert ist, um elektrisch mit dem Kartenanwesenheitsdetektor (10) des Lesers zusammenzuwirken.

14. Abnehmbare Vorrichtung nach einem der Ansprüche 5 bis 13, **dadurch gekennzeichnet, dass** die Position des elektrischen Kontakts (4) Kategorien von Vorrichtungen kennzeichnet.

15. Chipkartenleser (2) mit einer Aufnahme mit einem Verbinder mit elektrischen Kontakten, welche geeignet sind, mit den Pins einer Verbindungstaste einer in die Aufnahme eingeführten Karte zusammenzuwirken, wobei die Karte eine Vielzahl von Schaltkreisen (7, 8; 11), die über einen Kommunikationsweg kommunizieren, und einen Kartenanwesenheitsdetektor (10), dessen Spannung sich bei Einführung einer Karte ändert, aufweist, **dadurch gekennzeichnet, dass** der Detektor (10) über eine metallischen Abschnitt verfügt, der mit einem metallischen Abschnitt der eingeführten Karte in Kontakt treten kann, und dass der Leser ein Kommunikationsmittel aufweist, das über den Kartenanwesenheitsdetektor (10) ein Signal zur Steuerung der Schaltung der Kommunikationswege überträgt, welches es einem Schaltkreis der Karte ermöglicht, über einen der Pins der Verbindungstaste zu kommunizieren.

16. Chipkartenleser nach Anspruch 15, **dadurch gekennzeichnet, dass** er ferner ein Mittel zum Senden eines Signals zum Auswählen eines Schaltkreises der in die Aufnahme eingeführten Karte aufweist.

17. Chipkartenleser nach Anspruch 16, **dadurch gekennzeichnet, dass** er ein Mittel zum Senden einer Vielzahl von das Schaltsignal bildenden Elementarsignalen aufweist, wobei die Anzahl von Elementarsignalen den Kartenschaltkreis auswählt, der dazu bestimmt ist, mit dem Leser (2) zu kommunizieren.

18. Chipkartenleser nach Anspruch 15, **dadurch gekennzeichnet, dass** er ein Mittel zur Analyse der Spannung an dem Kartenanwesenheitsdetektor (10) aufweist, um zu ermitteln, ob diese Daten über den Kartenanwesenheitsdetektor (10) übertragen werden können.

19. Chipkartenleser nach Anspruch 15 oder 18, **dadurch gekennzeichnet, dass** das Kommunikationsmittel bidirektional ist, wobei die von dem Kartenanwesenheitsdetektor (10) gesendeten Daten dazu bestimmt sind, von der Karte an einen Benutzer gesendet zu werden.

20. Chipkartenleser nach einem der Ansprüche 15 bis 19, **dadurch gekennzeichnet, dass** die Position des Kartenanwesenheitsdetektors (13) in der Aufnahme es ermöglicht, Kategorien von Karten zu bestimmen, die dazu bestimmt sind, mit dem Leser zu dialogieren.
